# EUROPÄISCHE PATENTSCHRIFT

(11) **EP 4 387 892 B1**
(45) Veröffentlichungstag und Bekanntmachung des Hinweises auf die Patenterteilung: **06.08.2025**
(21) Anmeldenummer: 22765122.1
(22) Anmeldetag: 16.08.2022
(51) Int. Cl.: G01C 21/00, B64U 101/30, B64U 101/70

(54) **VERFAHREN ZUR ERSTELLUNG WENIGSTENS EINER ABBILDUNG WENIGSTENS EINES INNENRAUMES**
METHOD FOR CREATING AT LEAST ONE IMAGE OF AT LEAST ONE INTERIOR SPACE
PROCÉDÉ DE CRÉATION D'AU MOINS UNE IMAGE D'AU MOINS UN ESPACE INTÉRIEUR

(30) Priorität: 19.08.2021 AT 506752021
(43) Veröffentlichungstag der Anmeldung: 26.06.2024
(73) Patentinhaber: BOZKURT, Hüseyin, 1200 Wien (AT)
(72) Erfinder: BOZKURT, Hüseyin, 1200 Wien (AT)
(74) Vertreter: Gibler & Poth Patentanwälte KG
(86) Internationale Anmeldenummer: PCT/EP2022/072875
(87) Internationale Veröffentlichungsnummer: WO 2023/021043

(56) Entgegenhaltungen:
- WO-A1-2018/089268
- CN-A- 110 398 982
- DE-A1- 102018 102 789
- KR-B1- 101 839 111

## Beschreibung

Die Erfindung betrifft ein Verfahren zur Erstellung wenigstens einer Abbildung wenigstens eines Innenraumes eines Bauwerks mittels eines unbemannten Flugobjektes gemäß dem Oberbegriff des Patentanspruches 1.

Es ist bekannt, dass die Errichtung eines Bauwerks und/oder der Innenausbau nach der Errichtung des Bauwerks oftmals von verschiedenen Firmen durchgeführt werden. Da derartige bauliche Maßnahmen generell mit hohen Kosten für den Auftraggeber verbunden sind, ist auf einer Baustelle für die jeweiligen werkenden Firmen ein Zeitdruck für die Fertigstellung der beauftragten Arbeiten gegeben. Des Weiteren sind Investoren bzw. Bauherren eines Bauwerks üblicherweise an dem Baufortschritt ihres Bauwerks interessiert, um möglichst zeitnah das Bauwerk nutzen zu können. Darüber hinaus ist es üblich, dass der Baufortschritt eines Bauwerks dokumentiert wird, damit auch retrospektive Betrachtungen ermöglicht werden. Weiters ist bekannt, dass Drohnen zur Erstellung von Abbildungen eingesetzt werden, wodurch die Erstellung von Abbildungen speziell in schwierigen Situationen, wesentlich erleichtert wird.

Nachteilig an der Verwendung von unterschiedlichen Firmen auf einer Baustelle ist, dass das Zeitintervall für die Fertigstellung der Arbeiten sehr kurz bemessen ist, wodurch die auf der Baustelle arbeitenden Arbeiter unter einem ständigen Zeitdruck arbeiten. Hieraus folgend können sich jedoch besonders leicht und schnell Fehler bzw. menschliches Versagen ergeben, wie beispielsweise falsch verlegte Kabelkanäle oder falsch angebrachte Steckdosenplätze. Die Ursache dieser Fehler ist im Nachhinein für die Auftraggeber dieser Arbeiten oftmals nur sehr schwer nachzuvollziehen, wodurch sich langwierige und kostenintensive Streitigkeiten ergeben können.

Aus dem Stand der Technik bezüglich Systeme und Verfahren zur Erstellung von Bildern eines Gebäudeinneren mit Hilfe eines unbemannten Flugobjekts sind die Offenlegungen KR 101839111 B1, CN 110398982 A und WO 2018/089268 A1 bekannt.

Aufgabe der Erfindung ist es daher ein Verfahren der eingangs genannten Art anzugeben, mit welchem die genannten Nachteile vermieden werden können, mit welchem eine nachvollziehbare und retrospektive Beurteilung wenigstens eines Innenraumes eines Bauwerks ermöglicht wird.

Erfindungsgemäß wird dies durch die Merkmale des Patentanspruches 1 erreicht.

Dadurch ergibt sich der Vorteil, dass eine Abbildung wenigstens eines Innenraumes eines Bauwerks erstellt werden kann, welche in einer retrospektiven Beurteilung verwendet werden kann. Daher können auch noch eine lange Zeit später, nach der Errichtung eines Bauwerks bzw. nach dessen Innenausbau, Baufehler entdeckt und dem Verursacher bzw. dem für die durchzuführende Arbeit Beauftragten zugeordnet werden. Durch die Berücksichtigung der Referenzmarkierung bei der Erstellung der wenigstens einen Abbildung kann eine Abweichung der durchgeführten Bauarbeiten von einem vorgegebenen Bauplan präzise, einfach und schnell aus der wenigstens einen Abbildung abgeleitet bzw. identifiziert werden. Durch die Erstellung der wenigstens einen Abbildung in einer vorgegebenen Flughöhe des Kamerasystems, können Bildfehler, wie beispielsweise eine Bildfeldwölbung und/oder eine Verzeichnung, besonders einfach und genau bei der Ermittlung einer Höhe aus der wenigstens einen Abbildung berücksichtigt werden. Nachdem die Referenzmarkierung auch von Arbeitern, welche in dem Bauwerk Bauarbeiten durchführen, als Höhenreferenzmarkierung für deren Arbeiten verwendet werden kann, kann eine Abweichung einer durchgeführten Arbeit eines Arbeiters von einem vorgegebenen Bauplan schnell und präzise anhand der wenigstens einen Abbildung identifiziert bzw. nachgeprüft werden. Dadurch kann beispielsweise die Höhe einer von einem Arbeiter zu tief verlegte Steckdose, sowie der zu der Steckdose hinführende Kabelkanal, auch noch Jahre später anhand der wenigstens einen Abbildung nachgeprüft werden bzw. die Höhe der Steckdose und die Höhe des Kabelkanals aus der wenigstens einen Abbildung bestimmt werden. Weiters kann dadurch auch noch Jahre später die genaue Position einer, während eines Innenausbaus eines Bauwerks, an einer Wand, an einer Decke oder an einem Boden durchgeführten Bauarbeit aus der wenigstens einen Abbildung bestimmt bzw. vermessen werden. Durch den Bezug der wenigstens einen Abbildung zu der Referenzmarkierung kann die wenigstens eine Abbildung im Gegensatz zu derzeit bekannten Gebäudeaufnahmen bzw. Aufnahmen wenigstens eines Innenraumes auch in vorteilhafterweise zur Klärung einer Schadensursache bei einem Rechtstreit herangezogen werden.

Die Erfindung betrifft weiters die Verwendung eines unbemannten Flugobjekts zur Erstellung wenigstens einer Abbildung wenigstens eines Innenraumes eines Bauwerks, gemäß dem Patentanspruch 10.

Die Erfindung hat daher weiters die Aufgabe ein unbemanntes Flugobjekt der eingangs genannten Art anzugeben, mit welchem die genannten Nachteile vermieden werden können, mit welchem eine nachvollziehbare und retrospektive Beurteilung wenigstens eines Innenraumes eines Bauwerks ermöglicht wird. Erfindungsgemäß wird dies durch die Merkmale des Patentanspruches 10 erreicht. Die Vorteile des unbemannten Flugobjekts entsprechen den Vorteilen des oben genannten Verfahrens.

Die Unteransprüche betreffen weitere vorteilhafte Ausgestaltungen der Erfindung. Ausdrücklich wird hiermit auf den Wortlaut der Patentansprüche Bezug genommen, wodurch die Patentansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine Prinzipskizze für die Erstellung wenigstens einer Abbildung wenigstens eines Innenraumes eines Bauwerks mittels eines unbemannten Flugobjekts,
Fig. 2 eine Prinzipskizze für die Ausrichtung der Höhe des Kamerasystems nach einer vorgegebenen Höhe einer Referenzmarkierung.

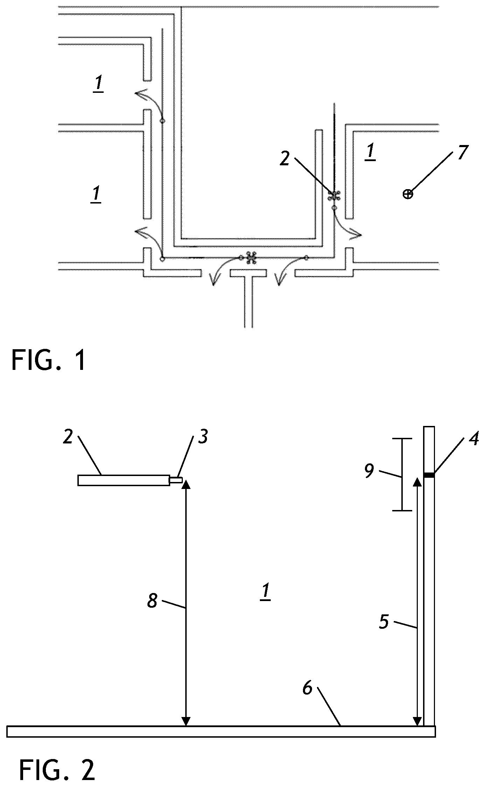

Die Fig. 1 bis 2 zeigen zumindest Teile einer bevorzugten Ausführungsform eines Verfahrens zur Erstellung wenigstens einer Abbildung wenigstens eines Innenraumes 1 eines Bauwerks mittels eines unbemannten Flugobjektes 2, wobei das unbemannte Flugobjekt 2 ein Kamerasystem 3 zur Erstellung der wenigstens einen Abbildung umfasst, wobei eine Referenzmarkierung 4 in einer vorgegebenen Höhe 5 zu einem vorhandenen oder geplanten Boden 6 des wenigstens einen Innenraumes 1 angeordnet ist, wobei zumindest ein vorgegebener Fixpunkt 7 in dem wenigstens einen Innenraum 1 von dem unbemannten Flugobjekt 2 angesteuert wird und das unbemannte Flugobjekt 2 an dem zumindest einen vorgegebenen Fixpunkt 7 positioniert wird, wobei die Flughöhe des Kamerasystems 8 nach der vorgegebenen Höhe der Referenzmarkierung 5 ausgerichtet wird, wobei an dem zumindest einen vorgegebenen Fixpunkt 7 von dem Kamerasystem 3 die wenigstens eine Abbildung erstellt wird.

Es ist weiters ein unbemanntes Flugobjekt 2 zur Erstellung wenigstens einer Abbildung wenigstens eines Innenraumes 1 eines Bauwerks vorgesehen.

Dadurch ergibt sich der Vorteil, dass eine Abbildung wenigstens eines Innenraumes 1 eines Bauwerks erstellt werden kann, welche in einer retrospektiven Beurteilung verwendet werden kann. Daher können auch noch eine lange Zeit später, nach der Errichtung eines Bauwerks bzw. nach dessen Innenausbau, Baufehler entdeckt und dem Verursacher bzw. dem für die durchzuführende Arbeit Beauftragten zugeordnet werden. Durch die Berücksichtigung der Referenzmarkierung 4 bei der Erstellung der wenigstens einen Abbildung kann eine Abweichung der durchgeführten Bauarbeiten von einem vorgegebenen Bauplan präzise, einfach und schnell aus der wenigstens einen Abbildung abgeleitet bzw. identifiziert werden. Durch die Erstellung der wenigstens einen Abbildung in einer vorgegebenen Flughöhe des Kamerasystems 8, können Bildfehler, wie beispielsweise eine Bildfeldwölbung und/oder eine Verzeichnung, besonders einfach und genau bei der Ermittlung einer Höhe aus der wenigstens einen Abbildung berücksichtigt werden. Nachdem die Referenzmarkierung 4 auch von Arbeitern, welche in dem Bauwerk Bauarbeiten durchführen, als Höhenreferenzmarkierung für deren Arbeiten verwendet werden kann, kann eine Abweichung einer durchgeführten Arbeit eines Arbeiters von einem vorgegebenen Bauplan schnell und präzise anhand der wenigstens einen Abbildung identifiziert bzw. nachgeprüft werden. Dadurch kann beispielsweise die Höhe einer von einem Arbeiter zu tief verlegte Steckdose, sowie der zu der Steckdose hinführende Kabelkanal, auch noch Jahre später anhand der wenigstens einen Abbildung nachgeprüft werden bzw. die Höhe der Steckdose und die Höhe des Kabelkanals aus der wenigstens einen Abbildung bestimmt werden. Weiters kann dadurch auch noch Jahre später die genaue Position einer, während eines Innenausbaus eines Bauwerks, an einer Wand, an einer Decke oder an einem Boden durchgeführten Bauarbeit aus der wenigstens einen Abbildung bestimmt bzw. vermessen werden. Durch den Bezug der wenigstens einen Abbildung zu der Referenzmarkierung 4 kann die wenigstens eine Abbildung im Gegensatz zu derzeit bekannten Gebäudeaufnahmen bzw. Aufnahmen wenigstens eines Innenraumes 1 auch in vorteilhafterweise zur Klärung einer Schadensursache bei einem Rechtstreit herangezogen werden.

Das Verfahren ist zur Erstellung wenigstens einer Abbildung wenigstens eines Innenraumes 1 eines Bauwerks mittels eines unbemannte Flugobjektes 2 vorgesehen. Das Verfahren kann bevorzugt auch zur Erstellung von zwei, drei oder mehr Abbildungen von zwei, drei oder mehr Innenräumen eines Bauwerks verwendet werden. Bevorzugt kann das vorgeschlagene Verfahren einen Abbildungsschritt umfassen, wobei die wenigstens eine Abbildung in dem Abbildungsschritt erstellt wird.

Die Abbildung kann eine zweidimensionale Abbildung und/oder eine dreidimensionale Abbildung sein.

Bevorzugt kann die wenigstens eine Abbildung des wenigstens einen Innenraumes 1 aus einem oder mehreren Einzelbildern erstellt werden. Bevorzugt werden Einzelbilder des wenigstens eines Innenraumes 1 erstellt. Insbesondere werden mehrere Einzelbilder zu einer Abbildung zusammengefügt. Derartige Programme zum Zusammenfügen von Abbildungen sind aus dem Stand der Technik bekannt. Daher wird die Erstellung von zusammengefügten Abbildungen an dieser Stelle nicht näher erläutert.

Bevorzugt werden die Einzelbilder derart zusammengefügt, dass sich eine dreidimensionale Abbildung des wenigstens eines Innenraumes 1 ergibt.

Alternativ wird die wenigstens eine Abbildung aus lediglich einem Bild des wenigstens eines Innenraumes 1 erstellt.

Das unbemannte Flugobjekt 2 ist bevorzugt ein Luftfahrzeug, insbesondere eine Drohne. Es kann jedoch jede Art von unbemannten Luftfahrzeugen verwendet werden, welche eine fixe Position in der Luft einnehmen kann, wie beispielsweise ein kleiner Helikopter. Unbemannt bedeute hierbei, dass das unbemannte Flugobjekt 2 ohne eine an Bord befindliche Besatzung betrieben wird.

Bevorzugt umfasst das unbemannte Flugobjekt 2 einen Computer. Insbesondere wird das unbemannte Flugobjekt 2 mittels des Computers navigiert.

Bevorzugt ist der Computer ein Minicomputer, besonders bevorzugt ein Einplatinencomputer, insbesondere ein Raspberry Pi. Insbesondere kann der Computer einen internen Speicher umfassen.

Alternativ kann das unbemannte Flugobjekt 2 auch über eine Fernsteuerung navigiert werden.

Es ist vorgesehen, dass das unbemannte Flugobjekt 2 ein Kamerasystem 3 zur Erstellung der wenigstens einen Abbildung umfasst. Bevorzugt kann das Kamerasystem 3 wenigstens eine Kamera umfassen. Insbesondere kann das Kamerasystem 3 zwei, drei oder mehr Kameras umfassen. Insbesondere können die Kameras voneinander beabstandet angeordnet sein.

Bevorzugt kann das Kamerasystem 3 lediglich eine Kamera umfassen.

Bevorzugt ist vorgesehen, dass mit der wenigstens einen Kamera die wenigstens eine Abbildung des wenigstens einen Innenraumes 1 erstellt wird.

Bevorzugt kann die wenigstens eine Kamera des Kamerasystems 3 eine omnidirektionale Kamera sein. Eine omnidirektionale Kamera ist auch unter den Namen Vollsphären-Kamera, 360-Grad-Kamera oder VR-Kamera bekannt.

Bevorzugt kann das Kamerasystem 3 und/oder die wenigstens eine Kamera an dem unbemannten Flugobjekt 2 schwenkbar angeordnet und/oder befestigt sein.

Alternativ kann das Kamerasystem 3 und/oder die wenigstens eine Kamera an dem unbemannten Flugobjekt 2 starr angeordnet und/oder befestigt sein.

Bevorzugt kann die wenigstens eine Kamera wenigstens ein Objektiv, insbesondere ein Weitwinkelobjektiv und/oder ein Fisheye-Objektiv, umfassen. Insbesondere kann das Weitwinkelobjektiv und/oder das Fisheye-Objektiv zur Erstellung der wenigstens einen Abbildung verwendet werden.

Alternativ kann die wenigstens eine Kamera auch ein Standardobjektiv und/oder ein Teleobjektiv umfassen.

Bevorzugt kann die wenigstens eine Kamera ein Zoom-Objektiv und/oder eine Festbrennweite umfassen.

Die wenigstens eine Kamera, insbesondere das wenigstens eine Objektiv, kann bevorzugt wenigstens eine Linse bzw. wenigstens ein Linsensystem umfassen.

Besonders bevorzugt kann die wenigstens eine Linse eine Weitwinkellinse und/oder eine Fisheye-Linse sein.

Bevorzugt kann das Kamerasystem 3 einen internen und/oder einen externen Speicher umfassen. Bevorzugt werden Abbildungen auf dem internen und/oder externen Speicher des Kamerasystems 3 abgespeichert.

Insbesondere können die Einzelbilder des wenigstens einen Innenraumes 1 auf dem internen und/oder auf dem externen Speicher des Kamerasystems 3 abgespeichert werden.

Insbesondere kann der externe Speicher des Kamerasystems 3 eine Speicherkarte sein. Die Speicherkarte ist dabei bevorzugt ein wiederbeschreibbares Speichermedium, wobei die Daten insbesondere mittels Flash-Speicher-Technik gespeichert werden. Bevorzugt kann die Speicherkarte eine CompactFlash, ein Memory Stick, eine Multimedia Card, eine Secure Digital Memory Card, eine Smart Media, eine xD-Picture Card und/oder eine XQD sein.

Bevorzugt kann das unbemannte Flugobjekt 2 eine drahtlose Kommunikationseinrichtung umfassen. Insbesondere kann die drahtlose Kommunikationseinrichtung die WLAN-Übertragungstechnik und/oder die Mobilfunktechnik nutzen.

Bevorzugt können die wenigstens eine Abbildung und/oder die Einzelbilder mittels der drahtlosen Kommunikationseinrichtung zu einem externen Server übertragen werden, wobei die wenigstens eine Abbildung und/oder die Einzelbilder insbesondere in dem Speicher des externen Servers abgespeichert werden.

Insbesondere können die im internen und/oder externen Speicher des Kamerasystems 3 abgespeicherten Abbildungen zur retrospektiven Beurteilung des wenigstens eines Innenraumes 1 des Bauwerks verwendet werden.

Insbesondere können die auf dem externen Server abgespeicherten Abbildungen zur retrospektiven Beurteilung des wenigstens eines Innenraumes 1 des Bauwerks verwendet werden.

Es ist vorgesehen, dass eine Referenzmarkierung 4 in einer vorgegebenen Höhe 5 zu einem vorhandenen oder geplanten Boden 6 des wenigstens eines Innenraumes 1 angeordnet ist. Der vorhandene Boden 6 ist dabei bevorzugt der Fußboden, welcher sich bei der Erstellung der wenigstens einen Abbildung bereits in dem wenigstens einen Innenraum 1 befindet. Der geplante Boden 6 ist bevorzugt der Fußboden, welcher nach dessen Verlegung in dem wenigstens einen Innenraum 1 angeordnet wird und zum Zeitpunkt der Erstellung der wenigstens einen Abbildung noch nicht in dem wenigstens einen Innenraum 1 vorhanden ist.

Insbesondere ist der geplante Boden 6 der Fußboden, welcher nach dessen Verlegung im Rohbau in dem wenigstens einen Innenraum 1 angeordnet wird.

Bevorzugt ist die Referenzmarkierung 4 eine optische Markierung.

Alternativ kann die Referenzmarkierung 4 auch ein Transmitter sein. Bevorzugt ist der Transmitter in einer vorgegebenen Höhe zu einem vorhandenen oder geplanten Boden 6 des wenigstens einen Innenraumes 1 befestigt. Dadurch ergibt sich der Vorteil, dass keine visuelle Markierung benötigt wird, wodurch die Referenzmarkierung 4 auch noch nach dem Ausmalen der Wände des wenigstens einen Innenraumes 1 angeordnet bleiben kann. Dadurch kann auch noch eine lange Zeit später nach einem Wohnungseigentümerwechsel bzw. einem Mieterwechsel bei einem Umbau des wenigstens einen Innenraumes 1 die ursprünglich angeordnete Referenzmarkierung 4 verwendet werden.

Bevorzugt ist die Referenzmarkierung 4 an wenigstens einer Wand des wenigstens einen Innenraumes 1 angeordnet.

Besonders bevorzugt ist die Referenzmarkierung 4 an zwei, drei oder mehr Wänden des wenigstens einen Innenraumes 1 angeordnet.

Alternativ ist die Referenzmarkierung 4 lediglich an einer Wand des wenigstens einen Innenraumes 1 angeordnet.

Insbesondere wird die Referenzmarkierung 4 zeitlich vorhergehend in dem wenigstens einen Innenraum 1 angeordnet. Die zeitliche Bezugnahme "zeitlich vorhergehend" bezeichnet hierbei insbesondere einen Schritt bevor der zumindest eine vorgegebene Fixpunkt 7 von dem unbemannten Flugobjekt 2 angesteuert wird.

Es ist vorgesehen, dass zumindest ein vorgegebener Fixpunkt 7 in dem wenigstens einen Innenraum 1 von dem unbemannten Flugobjekt 2 angesteuert wird. Der zumindest eine vorgegebene Fixpunkt 7 ist bevorzugt ein Ort in dem wenigstens einen Innenraum 1 mit vorgegebenen Lagekoordinaten. Weiters kann der vorgegebene Fixpunkt 7 auch als Referenzpunkt, als Festpunkt, als Vermessungspunkt, als Messpunkt und/oder als "picture point" bezeichnet werden.

Bevorzugt wird ein erster vorgegebenen Fixpunkt 7 in einem ersten Innenraum 1 von dem unbemannten Flugobjekt 2 angesteuert, wobei besonders bevorzugt zeitlich nachfolgend nach der Erstellung einer ersten Abbildung an dem ersten vorgegebenen Fixpunkt 7 zumindest ein weiterer vorgegebener Fixpunkt 7 in dem ersten Innenraum 1 angesteuert wird.

Alternativ kann bevorzugt vorgesehen sein, dass lediglich ein vorgegebener Fixpunkt 7 in dem wenigstens einen Innenraum 1 von dem unbemannten Flugobjekt 2 angesteuert wird.

Bevorzugt sind der zumindest eine vorgegebene Fixpunkt 7, insbesondere die Lagekoordinaten und/oder die GPS-Koordinaten des zumindest einen vorgegebenen Fixpunktes 7, auf dem internen Speicher des Computers abgespeichert.

Bevorzugt kann der zumindest eine vorgegebene Fixpunkt 7 von dem unbemannten Flugobjekt 2 in einem periodischen und/oder einem nicht periodischen Zeitintervall angesteuert werden. Insbesondere kann das Zeitintervall Tage, Wochen und/oder Monate umfassen.

Weiters ist vorgesehen, dass das unbemannte Flugobjekt 2 an dem vorgegebenen Fixpunkt 7 positioniert wird. Das Positionieren des unbemannten Flugobjektes 2 umfasst dabei insbesondere das Einnehmen einer vorbestimmten Lage. Die vorbestimmte Lage kann insbesondere eine horizontale Ausrichtung und/oder eine von einer horizontalen Ausrichtung abweichende Ausrichtung des unbemannten Flugobjektes 2 sein.

Insbesondere kann die Positionierung des unbemannten Flugobjektes 2 an dem vorgegebenen Fixpunkt 7 ein Einnehmen einer Ruhelage in der Luft umfassen. Die Ruhelage des unbemannten Flugobjektes 2 in der Luft ist dabei bevorzugt eine Lage bei der das unbemannte Flugobjekt 2 im Wesentlichen keine räumliche Bewegung ausführt. Insbesondere ist die Ruhelage des unbemannten Flugobjektes 2 in der Luft eine Lage bei der eine Abbildung mit einer hohen Schärfe erstellt werden kann. Eine Abbildung mit einer hohen Schärfe ist insbesondere eine nicht verwackelte Abbildung und/oder ein nicht verwackeltes Einzelbild.

Bevorzugt kann das unbemannte Flugobjekt 2 zur Ansteuerung des zumindest einen vorgegebenen Fixpunktes 7 und/oder zur Positionierung an dem zumindest einen vorgegebenen Fixpunkt 7 am Bauwerk angebrachte Orientierungspunkte, insbesondere Dioden, verwenden. Insbesondere können die am Bauwerk angebrachten Orientierungspunkte, insbesondere die Dioden, von dem unbemannten Flugobjekt 2 zur Stabilisierung in der Luft verwendet werden. Insbesondere sind die am Bauwerk angebrachten Orientierungspunkte an den Wänden angebracht.

Bevorzugt kann vorgesehen sein, dass das unbemannte Flugobjekt 2 die am Bauwerk angebrachten Orientierungspunkte, insbesondere die Dioden, zur Orientierung im Bauwerk verwendet.

Bevorzugt kann das vorgeschlagene Verfahren einen Positionierungsschritt umfassen, wobei das unbemannte Flugobjekt 2 in dem Positionierungsschritt positioniert wird.

Bevorzugt wird der Abbildungsschritt zeitlich vor dem Positionierungsschritt ausgeführt.

Bevorzugt ist vorgesehen, dass das unbemannte Flugobjekt 2 in einer horizontalen Ausrichtung die wenigstes eine Abbildung des wenigstens eines Innenraumes 1 erstellt.

Alternativ kann vorgesehen sein, dass das unbemannte Flugobjekt 2 die wenigstens eine Abbildung des wenigstens einen Innenraumes 1 unter einem vorgegebenen Winkel zu einer horizontalen Lage des unbemannten Flugobjektes 2 erstellt. Dadurch ergibt sich der Vorteil, dass bei einer starren Anordnung des Kamerasystems 3 und/oder der wenigstens einen Kamera an dem unbemannten Flugobjekt 2 die Raumhöhe bei der Erstellung von Einzelbilder berücksichtigt werden kann. Dadurch kann insbesondere bei Verwendung lediglich einer Kamera mit einer Festbrennweite das unbemannte Flugobjekt 2 an die Raumhöhe schnell und einfach angepasst werden bevor ein Einzelbild des wenigstens eines Innenraumes 1 erstellt wird. Dadurch kann sich das unbemannte Flugobjekt 2 in der Luft in eine Schräglage begeben, wodurch bei Erstellung eines Einzelbildes des wenigstens eines Innenraumes 1 ein möglichst größer Bereich des wenigstens eines Innenraumes 1 aufgenommen werden kann.

Es ist vorgesehen, dass die Flughöhe des Kamerasystems 8 nach der vorgegebenen Höhe der Referenzmarkierung 5 ausgerichtet wird.

Bevorzugt kann die Flughöhe des Kamerasystems 8 derart ausgerichtet werden, dass die Referenzmarkierung 4 in einer erstellten Abbildung mittig ausgerichtet ist.

Alternativ kann das Kamerasystem 3 derart ausgerichtet werden, dass keine Verzerrung der Referenzmarkierung 4 in der wenigstens einen Abbildung auftritt.

Insbesondere kann das unbemannte Flugobjekt 2 eine Reflexionslichtschranke umfassen. Bevorzugt kann die Reflexionslichtschranke zur Ausrichtung der Flughöhe des Kamerasystems 8 nach der vorgegebenen Höhe der Referenzmarkierung 5 verwendet werden.

Die Flughöhe des Kamerasystems 8 ist bevorzugt die Höhe, insbesondere die vertikale Höhe, über den vorhandenen oder geplanten Boden 6 des wenigstens eines Innenraumes 1. Die Flughöhe des Kamerasystems 8 ist bevorzugt vom verwendeten Kamerasystem 3 abhängig.

Insbesondere ist die Flughöhe des Kamerasystems 8 einer schwenkbaren Kamera die Höhe auf der sich der Schwenkpunkt des Kamerasystems 3 und/oder der Kamera gegenüber dem vorhandenen oder geplanten Boden 6 befindet.

Insbesondere ist die Flughöhe des Kamerasystems 8 einer 360 Grad Kamera die Höhe auf dem sich der Linsenmittelpunkt einer Linse eines Objektivs der wenigstens einen Kamera gegenüber dem vorhandenen oder geplanten Boden 6 befindet.

Besonders bevorzugt wird die Flughöhe des Kamerasystems 8 während der Ansteuerung des zumindest einen vorgegebenen Fixpunktes 7 und/oder während der Positionierung an dem zumindest einen vorgegebenen Fixpunkt 7 nach der vorgegebenen Höhe der Referenzmarkierung 5 ausgerichtet.

Insbesondere entspricht die Flughöhe des Kamerasystems 8 dem Blickpunkt einer erstellten wenigstens einen Abbildung.

Es ist vorgesehen, dass das Kamerasystem 3 an dem zumindest einen vorgegebenen Fixpunkt 7 die wenigstens eine Abbildung erstellt.

Bevorzugt kann vorgesehen sein, dass die wenigstens eine Abbildung lediglich einen Teilbereich des wenigstens eines Innenraumes 1 umfasst.

Alternativ kann die wenigstens eine Abbildung von dem gesamten Innenraum 1 erstellt werden. Bevorzugt ist der gesamte Innenraum 1 ein durch Wände, durch eine Decke und durch einen Boden umschlossener Raum.

Bevorzugt kann vorgesehen sein, dass sich das Kamerasystem 3 und/oder das unbemannte Flugobjekt 2 bei der Erstellung wenigstens einer Abbildung aus Einzelbilder zwischen der Erstellung des jeweiligen Einzelbildes um einen vorgegebenen horizontalen Winkel dreht und/oder neigt. Dadurch ergibt sich der Vorteil, dass der gesamte Innenraum 1 optimal von dem zumindest einem vorgegebenen Fixpunkt 7 abgebildet werden kann.

Bevorzugt ist vorgesehen, dass das Kamerasystem 3 innerhalb eines Höhentoleranzbereiches 9, welcher sich von der Referenzmarkierung 4 weg erstreckt, ausgerichtet wird. In Fig. 2 ist der Höhentoleranzbereich 9 durch die I-Form schematisch und beispielhaft dargestellt, wobei die zwei kurzen horizontalen Querbalken der I-Form den Höhentoleranzbereich 9 abgrenzen. Weiters ist in Fig. 2 ersichtlich, dass das Kamerasystem 3 innerhalb des Höhentoleranzbereiches 9 angeordnet ist. Es ist anzumerken, dass die Fig. 2 lediglich eine Prinzipskizze darstellt, woraus sich keine Höhenverhältnisse ableiten lassen. Des Weiteren ist in Fig. 2 ersichtlich, wie sich der Höhentoleranzbereich 9 von der Referenzmarkierung 4 weg erstreckt. Der Höhentoleranzbereich 9 erstreckt sich bevorzugt symmetrisch von der Referenzmarkierung 4 zu gleichen Teilen nach oben in Richtung Decke, sowie nach unten in Richtung Boden weg. Die Referenzmarkierung 4 ist dazu in einer vorgegebenen Höhe angeordnet, welche durch den Doppelpfeil in Fig. 2 ersichtlich ist. Des Weiteren ist die Flughöhe des Kamerasystems 8 ebenfalls mit einem Doppelpfeil in Fig. 2 ersichtlich. Durch die Anordnung des Kamerasystems 3 innerhalb des Höhentoleranzbereiches 9 ergibt sich der Vorteil, dass eine präzise Ausrichtung des Kamerasystems 3 nach der vorgegebenen Höhe der Referenzmarkierung 4 durchgeführt werden kann, wodurch aus der wenigstens einen Abbildung Höhenverhältnisse abgeleitet werden können.

Bevorzugt ist vorgesehen, dass der Höhentoleranzbereich 9 maximal 5%, besonders bevorzugt maximal 2%, insbesondere maximal 1% der Höhe des wenigstens einen Innenraumes 1 des Bauwerks entspricht. Dadurch ergibt sich der Vorteil, dass die wenigstens eine Abbildung mit einer besonders genauen Bezugnahme zu der Referenzmarkierung 4 erstellt werden kann.

Bevorzugt ist vorgesehen, dass die wenigstens eine Abbildung erstellt wird, wenn das Kamerasystem 3 auf der vorgegebenen Höhe der Referenzmarkierung 5 ist. Insbesondere können sich bei der Steuerung des unbemannten Flugobjektes 2 geringfügige Abweichungen ergeben, wobei die Flughöhe des Kamerasystems 8 innerhalb der geringfügigen Abweichung auf der vorgegebenen Höhe der Referenzmarkierung 5 ist, wenn die wenigstens eine Abbildung erstellt wird. Eine geringfügige Abweichung entspricht dabei bevorzugt einem Wert kleiner als 1% der Höhe des wenigstens einen Innenraumes 1 des Bauwerks. Dadurch ergibt sich der Vorteil, dass die wenigstens eine Abbildung mit einer besonders genauen Bezugnahme auf die Referenzmarkierung 4 erstellt werden kann. Dadurch können Abbildungen mit unterschiedlichen Zeitstempeln möglichst präzise miteinander verglichen werden. Des Weiteren ergibt sich dadurch der Vorteil, dass aus der wenigstens einen Abbildung Dimensionen bzw. Längen abgeleitet bzw. ausgelesen werden können. Dadurch kann die wenigstens eine Abbildung auch noch eine lange Zeit nach der Errichtung eines Bauwerks bzw. nach dessen Innenausbau für den Nachweis eines Baufehlers verwendet werden.

Durch die Erstellung der wenigstens einen Abbildung, wenn das Kamerasystem 3 auf der vorgegebenen Höhe der Referenzmarkierung 5 ist, kann eine Höhe aus der wenigstens einen Abbildung selbst dann bestimmt werden, wenn die Referenzmarkierung 4 nicht auf der wenigstens einen Abbildung abgebildet ist. Dadurch ergibt sich der Vorteil, dass eine Bestimmung der Flughöhe des Kamerasystems 8 zur Bestimmung bzw. Vermessung einer Höhe aus der wenigstens einen Abbildung nicht benötigt wird, da die vorgegebene Höhe der Referenzmarkierung 4 bekannt ist und die Flughöhe des Kamerasystems 8 somit durch die vorgegebene Höhe der Referenzmarkierung 5 vorgegeben wird. Dadurch entspricht auch in vorteilhafterweise der Blickpunkt auf die erstellte wenigstens eine Abbildung der vorgegebenen Höhe der Referenzmarkierung 5. Dadurch kann beispielsweise eine Höhe einer Steckdose schnell und einfach aus der wenigstens einen Abbildung bestimmt werden, da die Flughöhe des Kamerasystems 8, sowie der vorgegebene Fixpunkt 7 bekannt sind.

Bevorzugt ist vorgesehen, dass die Referenzmarkierung 4 der Meterriss des Bauwerks ist. Der Meterriss ist eine bekannte Markierung an signifikanten Stellen im Rohbau und wird bevorzugt als Referenzhöhe für Installationen, deren Montagehöhen einer planerischen Vorgabe entsprechen, verwendet. Bekannte Beispiele für die der Meterriss zur Planung und Ausmessung verwendet wird, sind insbesondere Elektroinstallationen wie Schalter und Steckdosen, Sanitäreinrichtungen wie Armaturen und Abflüsse, sowie Türzargen und die Höhe eines Fußbodens. Dadurch ergibt sich der Vorteil, dass eine möglichst genau vermessene Markierung für die Erstellung der wenigstens einen Abbildung verwendet wird, welche üblicherweise auf jeder Baustelle vorhanden ist und anhand welcher Markierung sich Arbeiter bei der Durchführung von Arbeiten, welche auf einer bestimmten Höhe durchgeführt werden sollen, orientieren. Dadurch kann besonders vorteilhaft die wenigstens eine Abbildung besonders einfach mit dem Bauplan des Bauwerks verglichen werden, wodurch Baufehler besonders einfach nachgewiesen werden können.

Alternativ kann vorgesehen sein, dass die Referenzmarkierung 4 unabhängig von dem Meterriss des Bauwerks in einer vorgegebenen Höhe zu einem vorhandenen oder geplanten Boden 6 des wenigstens einen Innenraumes 1 angeordnet ist. Hierbei kann vorgesehen sein, dass die Referenzmarkierung 4 in einem vorgegebenen Höhenunterschied zu dem Meterriss des Bauwerks angeordnet ist. Weiters kann hierbei vorgesehen sein, dass der vorgegebene Höhenunterschied der Referenzmarkierung 4 gegenüber dem Meterriss abhängig von der Höhe des wenigstens einen Innenraumes 1 ist.

Bevorzugt ist vorgesehen, dass das unbemannte Flugobjekt 2 Abstandssensoren verwendet, um den zumindest einen vorgegebenen Fixpunkt 7 anzusteuern und/oder um sich an dem zumindest einen vorgegebenen Fixpunkt 7 zu positionieren.

Bevorzugt ist vorgesehen, dass die Abstandssensoren zur Zentrierung in dem wenigstens einen Innenraum 1 von dem unbemannten Flugobjekt 2 verwendet werden. Dadurch ergibt sich der Vorteil, dass das unbemannte Flugobjekt 2 in dem wenigstens einen Innenraum 1 genau positioniert werden kann, wodurch Entfernungen zu Wänden in dem wenigstens einen Innenraum 1 genau gemessen werden können und sich das unbemannte Flugobjekt 2 von den Wänden in dem wenigstens einen Innenraum 1 besonders genau beabstandet anordnen kann.

Insbesondere können die Abstandssensoren Laserdistanzsensoren sein. Bevorzugt können die Abstandssensoren zur Abstandsmessung das Triangulationsprinzip und/oder eine Lichtlaufzeitmessung verwenden.

Alternativ kann das unbemannte Flugobjekt 2 einen Gebäudeplan zur Ansteuerung des zumindest einen vorgegebenen Fixpunktes 7 und zur Positionierung an dem zumindest einen vorgegeben Fixpunkt 7 verwenden. Insbesondere kann der Gebäudeplan auf dem internen Speicher des Computers des unbemannten Flugobjektes 2 abgespeichert sein.

Bevorzugt ist vorgesehen, dass der wenigstens eine Innenraum 1 zur Erstellung der wenigstens einen Abbildung von dem unbemannten Flugobjekt 2 autonom angesteuert wird. Besonders bevorzugt kann die wenigstens eine Abbildung des wenigstens eines Innenraumes 1 von dem Kamerasystem 3 des unbemannten Flugobjektes 2 autonom erstellt werden. Dadurch ergibt sich der Vorteil, dass das unbemannte Flugzeug die wenigstens eine Abbildung des wenigstens eines Innenraumes 1 ohne einer Fernsteuerung des unbemannten Flugobjektes 2 erstellen kann

Bevorzugt kann vorgesehen sein, dass nach der Erstellung der wenigstens einen Abbildung zumindest ein weiterer vorgegebener Fixpunkt 7 in einem weiteren Innenraum 1 des Bauwerks von dem unbemannten Flugobjekt 2 angesteuert wird. Dadurch ergibt sich der Vorteil, dass ohne eine Flugunterbrechung des unbemannten Flugobjektes 2 mehrere Abbildungen erstellt werden können, wodurch Kosten und Zeit bei der Erstellung mehrerer Abbildungen eingespart werden kann.

In Fig. 1 ist ersichtlich, wie das unbemannte Flugobjekt 2 durch ein Bauwerk bzw. ein Gebäude fliegt. Dabei fliegt das unbemannte Flugobjekt 2 auf seinem Weg zu dem zumindest einem vorgegebenen Fixpunkt 7 von einem Gang in den wenigstens einen Innenraum 1 hinein, steuert den zumindest einen vorgegebenen Fixpunkt 7 in dem wenigstens einen Innenraum 1 an und positioniert sich an dem zumindest einen vorgegebenen Fixpunkt 7. Nachfolgend oder zeitgleich während des Ansteuerns und/oder Positionierens an dem zumindest einen vorgegebenen Fixpunkt 7 richtet sich das unbemannte Flugobjekt 2 bevorzugt mit der Flughöhe des Kamerasystems 8 nach der vorgegebenen Höhe der Referenzmarkierung 5 aus, wobei die wenigstens eine Abbildung erstellt wird. Wie in Fig. 1 weiters bevorzugt dargestellt ist, fliegt das unbemannte Flugobjekt 2 nach der Erstellung der wenigstens einen Abbildung aus dem wenigstens einen Innenraum 1 heraus, entlang des Ganges bis zu einem weiteren Innenraum 1 des Bauwerks, steuert zumindest einen weiteren vorgegebenen Fixpunkt 7 in dem weiteren Innenraum 1 an, positioniert sich an dem zumindest einen weiteren vorgegebenen Fixpunkt 7 und erstellt dort wenigstens eine weitere Abbildung des weiteren Innenraumes 1.

Bevorzugt kann das Kamerasystem 3 des unbemannten Flugobjektes 2 von jedem Innenraum 1 des Bauwerks wenigstens eine Abbildung erstellen.

Bevorzugt kann das Kamerasystem 3 des unbemannten Flugobjektes 2 von jedem Innenraum 1 eines Stockwerks des Bauwerks wenigstens eine Abbildung erstellt werden.

Bevorzugt kann das Kamerasystem 3 des unbemannten Flugobjektes 2 aus jedem Innenraum 1 einer Wohnung wenigstens eine Abbildung erstellt werden.

Besonders bevorzugt kann die wenigstens eine Abbildung zur Erstellung eines Gebäudeplans des Bauwerks verwendet werden.

Besonders bevorzugt kann die wenigstens eine Abbildung zur Erstellung einer dreidimensionalen Darstellung des wenigstens einen Innenraumes 1 verwendet werden. Dadurch ergibt sich der Vorteil, dass durch die Verwendung der Referenzmarkierung 4 eine besonders genaue Darstellung des wenigstens einen Innenraumes 1 erstellt werden kann.

Besonders bevorzugt kann das unbemannte Flugobjekt 2 an einen Startpunkt gestartet werden. Insbesondere wird der erste vorgegebene Fixpunkt 7 in dem ersten Innenraum 1 ausgehend von dem Startpunkt von dem unbemannte Flugobjekt 2 angesteuert. Insbesondere
Bevorzugt kann der Startpunkt ein beliebiger Punkt innerhalb und/oder außerhalb des Bauwerks sein.

Nachfolgend werden Grundsätze für das Verständnis und die Auslegung gegenständlicher Offenbarung angeführt.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

Das Bindewort "oder" ist als inklusiv und nicht als exklusiv zu interpretieren. Sofern es sich aus dem Kontext nicht anders ergibt, umfasst "A oder B" auch "A und B", wobei "A" und "B" beliebige Merkmale darstellen.

Bei Wertebereichen sind die Endpunkte mitumfasst, sofern es sich aus dem Kontext nicht anders ergibt.

## Patentansprüche

1. Verfahren zur Erstellung wenigstens einer Abbildung wenigstens eines Innenraumes (1) eines Bauwerks mittels eines unbemannten Flugobjektes (2), wobei das unbemannte Flugobjekt (2) ein Kamerasystem (3) zur Erstellung der wenigstens einen Abbildung umfasst, wobei zumindest ein vorgegebener Fixpunkt (7) in dem wenigstens einen Innenraum (1) von dem unbemannten Flugobjekt (2) angesteuert wird und das unbemannte Flugobjekt (2) an dem zumindest einen vorgegebenen Fixpunkt (7) positioniert wird, wobei an dem zumindest einen vorgegebenen Fixpunkt (7) von dem Kamerasystem (3) die wenigstens eine Abbildung erstellt wird,
**dadurch gekennzeichnet, dass** eine Referenzmarkierung (4) in einer vorgegebenen Höhe (5) zu einem vorhandenen oder geplanten Boden (6) des wenigstens einen Innenraumes (1) angeordnet ist, und dass eine Flughöhe (8) des Kamerasystems (3) nach der vorgegebenen Höhe der Referenzmarkierung (5) ausgerichtet wird.

2. Verfahren nach Anspruch 1, **dadurch gekennzeichnet, dass** das Kamerasystem (3) innerhalb eines Höhentoleranzbereiches (9), welcher sich von der Referenzmarkierung (4) weg erstreckt, ausgerichtet wird.

3. Verfahren nach Anspruch 2, **dadurch gekennzeichnet, dass** der Höhentoleranzbereich (9) maximal 5%, besonders bevorzugt maximal 2%, insbesondere maximal 1% der Höhe des wenigstens einen Innenraumes (1) des Bauwerks entspricht.

4. Verfahren nach einem der Ansprüche 1 bis 3, **dadurch gekennzeichnet, dass** die wenigstens eine Abbildung erstellt wird, wenn das Kamerasystem (3) auf der vorgegebenen Höhe der Referenzmarkierung (5) ist.

5. Verfahren nach einem der Ansprüche 1 bis 4, **dadurch gekennzeichnet, dass** die Referenzmarkierung (4) ein Meterriss des Bauwerks ist.

6. Verfahren nach einem der Ansprüche 1 bis 5, **dadurch gekennzeichnet, dass** das unbemannte Flugobjekt (2) Abstandssensoren verwendet, um den zumindest einen vorgegebenen Fixpunkt (7) anzusteuern und/oder um sich an dem zumindest einen vorgegebenen Fixpunkt (7) zu positionieren.

7. Verfahren nach Anspruch 6, **dadurch gekennzeichnet, dass** die Abstandssensoren zur Zentrierung in dem wenigstens einen Innenraum (1) von dem unbemannten Flugobjekt (2) verwendet werden.

8. Verfahren nach einem der Ansprüche 1 bis 7, **dadurch gekennzeichnet, dass** der wenigstens eine Innenraum (1) zur Erstellung der wenigstens einen Abbildung von dem unbemannten Flugobjekt (2) autonom angesteuert wird.

9. Verfahren nach einem der Ansprüche 1 bis 8, **dadurch gekennzeichnet, dass** nach der Erstellung der wenigstens einen Abbildung zumindest ein weiterer vorgegebener Fixpunkt (7) in einem weiteren Innenraum (1) des Bauwerks von dem unbemannten Flugobjekt (2) angesteuert wird.

10. Verwendung eines unbemannten Flugobjekts (2) zur Erstellung wenigstens einer Abbildung wenigstens eines Innenraumes (1) eines Bauwerks, wobei das unbemannte Flugobjekt (2) ein Kamerasystem (3) umfasst, und wobei die wenigstens eine Abbildung von dem Kamerasystem (3) gemäß einem Verfahren nach einem der Ansprüche 1 bis 9 erstellt wird.

## Claims

1. Method for producing at least one image of at least one interior space (1) of a building by means of an unmanned flying object (2), wherein the unmanned flying object (2) comprises a camera system (3) for producing the at least one image, wherein at least one predetermined fixed point (7) in the at least one interior space (1) is targeted by the unmanned flying object (2) and the unmanned flying object (2) is positioned at the at least one predetermined fixed point (7), wherein the at least one image is produced at the at least one predetermined fixed point (7) by the camera system (3), **characterised in that** a reference mark (4) is arranged at a predetermined height (5) relative to an existing or planned floor (6) of the at least one interior space (1), and **in that** the flight height of the camera system (8) is aligned with the predetermined height of the reference mark (5).

2. Method according to claim 1, **characterised in that** the camera system (3) is aligned within a height tolerance range (9) which extends away from the reference mark (4).

3. Method according to claim 2, **characterised in that** the height tolerance range (9) corresponds to a maximum of 5%, particularly preferably a maximum of 2%, in particular a maximum of 1% of the height of the at least one interior space (1) of the structure.

4. Method according to one of claims 1 to 3, **characterised in that** the at least one image is created when the camera system (3) is at the specified height of the reference mark (5).

5. Method according to one of claims 1 to 4, **characterised in that** the reference mark (4) is a metre mark on the building.

6. Method according to one of claims 1 to 5, **characterised in that** the unmanned flying object (2) uses distance sensors to navigate to the at least one predetermined fixed point (7) and/or to position itself at the at least one predetermined fixed point (7).

7. Method according to claim 6, **characterised in that** the distance sensors are used for centring in the at least one interior space (1) of the unmanned flying object (2).

8. Method according to one of claims 1 to 7, **characterised in that** the at least one interior space (1) is autonomously controlled for the creation of the at least one image of the unmanned flying object (2).

9. Method according to one of claims 1 to 8, **characterised in that**, after the at least one image has been created, at least one further predetermined fixed point (7) in a further interior space (1) of the structure is targeted by the unmanned flying object (2).

10. Use of an unmanned flying object (2) for producing at least one image of at least one interior space (1) of a structure, wherein the unmanned flying object (2) comprises a camera system (3), wherein the at least one image is produced by the camera system (3) according to a method according to one of claims 1 to 9.

## Revendications

1. Procédé pour créer au moins une image d'au moins un espace intérieur (1) d'un bâtiment à l'aide d'un objet volant sans pilote (2), l'objet volant sans pilote (2) comprenant un système de caméra (3) pour créer au moins une image, au moins un point fixe prédéfini (7) dans le au moins un espace intérieur (1) est commandé par l'objet volant sans pilote (2) et l'objet volant sans pilote (2) est positionné au niveau du au moins un point fixe prédéfini (7), la au moins une image étant réalisée au niveau du au moins un point fixe prédéfini (7) par le système de caméra (3), **caractérisé en ce qu'**un repère de référence (4) est disposé à une hauteur prédéfinie (5) par rapport à un sol existant ou prévu (6) de l'au moins un espace intérieur (1), et **en ce que** la hauteur de vol du système de caméra (8) est alignée sur la hauteur prédéfinie du repère de référence (5).

2. Procédé selon la revendication 1, **caractérisé en ce que** le système de caméra (3) est aligné à l'intérieur d'une plage de tolérance en hauteur (9) qui s'étend à partir du repère de référence (4).

3. Procédé selon la revendication 2, **caractérisé en ce que** la plage de tolérance en hauteur (9) correspond au maximum à 5 %, de préférence au maximum à 2 %, en particulier au maximum à 1 % de la hauteur du ou des espaces intérieurs (1) du bâtiment.

4. Procédé selon l'une des revendications 1 à 3, **caractérisé en ce que** la au moins une image est créée lorsque le système de caméra (3) se trouve à la hauteur prédéfinie du repère de référence (5).

5. Procédé selon l'une des revendications 1 à 4, **caractérisé en ce que** le repère de référence (4) est un trait métrique du bâtiment.

6. Procédé selon l'une des revendications 1 à 5, **caractérisé en ce que** l'objet volant sans pilote (2) utilise des capteurs de distance pour se diriger vers le au moins un point fixe prédéfini (7) et/ou pour se positionner au niveau du au moins un point fixe prédéfini (7).

7. Procédé selon la revendication 6, **caractérisé en ce que** les capteurs de distance sont utilisés pour le centrage dans au moins un espace intérieur (1) de l'objet volant sans pilote (2).

8. Procédé selon l'une des revendications 1 à 7, **caractérisé en ce que** le ou les espaces intérieurs (1) sont commandés de manière autonome pour créer la ou les images de l'objet volant sans pilote (2).

9. Procédé selon l'une des revendications 1 à 8, **caractérisé en ce qu'**après la création de la au moins une image, au moins un autre point fixe prédéfini (7) dans un autre espace intérieur (1) de la construction est commandé par l'objet volant sans pilote (2).

10. Utilisation d'un objet volant sans pilote (2) pour créer au moins une image d'au moins un espace intérieur (1) d'un bâtiment, l'objet volant sans pilote (2) comprenant un système de caméra (3), la au moins une image étant créée par le système de caméra (3) selon un procédé selon l'une des revendications 1 à 9.
